# FASCICULE DE BREVET EUROPEEN

(11) **EP 3 782 790 B1**
(45) Date de publication et mention de la délivrance du brevet: **07.09.2022**
(21) Numéro de dépôt: 20188057.2
(22) Date de dépôt: 28.07.2020
(51) Int. Cl.: B29C 45/14, H01Q 1/02, H05B 3/16, H05B 3/18

(54) **PROCÉDÉ POUR PIÈCE DE CARROSSERIE COMPORTANT UN FILM CHAUFFANT**
VERFAHREN FÜR KAROSSERIETEIL, DAS EINE HEIZFOLIE UMFASST
PROCESS FOR A VEHICLE BODY PART COMPRISING A HEATING FILM

(30) Priorité: 29.07.2019 FR 1908631
(43) Date de publication de la demande: 24.02.2021
(73) Titulaire: Compagnie Plastic Omnium SE, 69007 Lyon (FR)
(72) Inventeur: DUBOST, Elise, 01150 Sainte Julie (FR); STABLO, Frédéric, 01150 Sainte-Julie (FR); TRESSE, David, 01150 Sainte-Julie (FR); BOISSON, Damien, 01150 Sainte-Julie (FR); JACQUEMET, Thierry, 01150 Sainte-Julie (FR); SELMANE, Ismael, 01150 Sainte-Julie (FR)
(74) Mandataire: LLR

(56) Documents cités:
- DE-A1-102018 007 404
- FR-A1- 3 075 720

## Description

L'invention concerne le domaine des véhicules automobiles. Et plus particulièrement le domaine de la fabrication d'un élément en matière plastique, destiné à être monté sur une pièce de carrosserie.

De nombreux véhicules modernes sont équipés d'éléments de carrosserie en matière plastique pouvant équiper par exemple un hayon arrière, un flan de portière, des pare-chocs avant et arrière, un toit, etc.

En particulier, depuis l'introduction des systèmes d'assistance à la conduite, on a besoin de placer sur certaines pièces de carrosserie en plastique des capteurs de différentes sortes, afin de mesurer des paramètres physiques extérieurs représentatifs de l'environnement extérieur du véhicule automobile. L'ensemble des valeurs de ces paramètres forme des informations disponibles en temps réel sur l'environnement du véhicule.

On utilise alors des éléments de carrosserie, rapportés sur la pièce de carrosserie, ayant, par exemple, une fonction de radôme, c'est-à-dire un élément transparent aux ondes électromagnétiques protégeant et cachant des capteurs. On entend de manière conventionnelle par transparent la capacité d'un matériau traversé par un flux d'ondes incident à transmettre une fraction supérieure à 90% du flux d'ondes le traversant. Par la suite, on utilisera le terme « transparent » pour faire référence à cette définition.

A titre d'exemple, les pare-chocs sont désormais fréquemment équipés de radars de proximité qui permettent d'assister le conducteur lors des phases de manœuvre de stationnement du véhicule automobile à basse vitesse.

Certains capteurs, comme celui cité dans l'exemple ci-dessus, peuvent voir leur fonctionnement normal déréglé par la présence d'une couche de glace, de neige ou de givre en cas de température en dessous de 10 degrés Celsius. Cette couche de givre vient perturber le passage normal des ondes électromagnétiques, ce qui est une source d'erreur pour l'évaluation des paramètres physiques extérieurs.

Afin d'éviter le dépôt de givre, qui vient non seulement rendre le système d'assistance inutilisable, mais qui de surcroît peut générer de fausses alarmes, il est indispensable de prévoir un système de dégivrage sur l'élément pour pièce de carrosserie, par exemple sur la zone de la pièce de carrosserie qui sert de radôme.

Un tel système de dégivrage est traditionnellement formé d'une piste chauffante, constituée de fils conducteurs capables de transformer une énergie électrique en énergie thermique est associée à deux plaques de connexion disposées à chaque extrémité de la piste chauffante afin de l'alimenter en un courant électrique. Ce système est positionné sur un élément pour pièce de carrosserie situé à proximité d'un capteur. L'énergie thermique ainsi dégagée permet de dégivrer localement la pièce dans le cas où une couche de givre s'est formée.

Il est connu, par exemple, du document US2018/0269569, un radôme chauffant comprenant un circuit imprimé (ou PCB de l'anglais « printed circuit board ») flexible formant un film qui est estampé et moulé dans le dos avec un matériau thermoplastique. Le circuit imprimé comprend une structure métallique qui est réalisée au moyen de bandes linéaires. Le radôme comprend en outre un connecteur permettant de raccorder le circuit imprimé à une alimentation électrique. Le radôme tel que décrit dans ce document nécessite un film suffisamment grand pour pouvoir couvrir toute la zone à chauffer qui est équivalent à la surface du radôme. Ainsi, les deux couches de plastique sont séparées l'une de l'autre par le film qui présente un encombrement important ce qui rend le radôme peu robuste et peu étanche. En outre, comme les éléments chauffants sont supportés par le film, ce dernier est présent sur toute la zone à chauffer. Les zones transparentes du radôme sont réduites due à la présence du film. Ainsi, la qualité esthétique du radôme est dégradée.

Les documents FR 3 075 720 A1 et DE 10 2018 007404 A1 décrivent des procédés de fabrication de pièce de véhicule automobile comprenant des moyens chauffants.

L'invention a notamment pour but de fournir un élément destiné à être monté sur une pièce de carrosserie, par exemple un radôme, qui est plus robuste et esthétique.

A cet effet l'invention a pour objet un procédé de fabrication d'un élément pour pièce de carrosserie selon la revendication 1.

Le procédé tel que proposé par la présente invention permet d'agencer une ou plusieurs pistes chauffantes aux endroits qui nécessitent un apport thermique ce qui augmente l'efficacité de dégivrage. De plus, substantiellement la totalité de l'élément de support est séparé de la couche moulée uniquement par les pistes chauffantes ce qui permet un encombrement réduit entre les couches et une robustesse accrue de la pièce finale. La qualité esthétique de l'élément pour pièce de carrosserie est également améliorée grâce à l'absence de feuille support sur la quasi-totalité de cet élément. En effet, la feuille support comportant l'organe de connexion peut être facilement déportée dans une zone peu visible depuis l'extérieur du véhicule.

Selon l'invention, la feuille support est une feuille souple, par exemple un circuit imprimé souple, pouvant être soumis à une torsion mécanique et permettant d'offrir un gain de place par rapport à l'utilisation de circuits rigides ou de câblage filaire manuel. L'organe de connexion peut être formé d'une plaque conductrice de l'électricité ou d'une broche métallique et la piste chauffante peut être formée d'un fil conducteur de l'électricité.

Selon l'invention, le procédé de fabrication comprend l'étape suivante avant l'étape D : on dispose sur la feuille support un moyen de protection de l'organe de connexion de façon à protéger au moins partiellement l'organe de connexion de la matière plastique pendant l'étape D. Le moyen de protection présente un espace contenant au moins partiellement l'organe de connexion de façon à ce que celui-ci soit isolé de la matière plastique injectée pendant le moulage tout en lui gardant un accès pour le branchement à une alimentation électrique.

Suivant d'autres caractéristiques optionnelles du procédé de fabrication prises seules ou en combinaison :
- l'élément de support est un film en matière plastique et l'étape A comprend les étapes suivantes :
   - on réalise un film en matière plastique,
   - on fixe sur une première face du film une feuille support comprenant au moins un organe de connexion.

La fixation de la feuille support sur le film permet de garantir la tenue de la feuille support pendant l'étape de surmoulage du film. Cette fixation peut être fait par collage, soudage ou encore l'utilisation de bande adhésive. Le film est réalisé par extrusion ou laminage mais il est également envisageable d'utiliser un film existant sur le marché.
- le procédé de fabrication comprend l'étape suivante : on dépose un revêtement sur une seconde face de l'élément de support, opposée à la première face. Le revêtement permet d'améliorer la résistance de l'élément de support aux UV ou à la rayure. Le revêtement peut être un vernis ou un revêtement issu d'un traitement hardcoat.
- l'élément de support est une pièce moulée et l'étape A comprend les étapes suivantes :
   - on dispose une feuille support comprenant au moins un organe de connexion dans une chambre de moulage d'un moule définissant la forme de l'élément de support, une première face de la feuille support étant face à l'intérieur de la chambre de moulage, et on injecte une matière plastique dans la chambre de moulage afin d'obtenir une pièce moulée couvrant la première face de la feuille support,
   - on dispose sur une seconde face de la feuille support, opposée à la première face, au moins un élément de connexion.
- la piste chauffante est raccordée à l'organe de connexion par soudure. Le type de soudure peut être de différente nature, par exemple TC bonding (ou liaison par thermocompression en français) ou encore la soudure électrique.
- la feuille support comprend une pluralité d'éléments de connexion reliés

électriquement entre eux par des moyens de connexion intégrés dans la feuille support et les étapes B et C consistent à disposer un nombre correspondant de piste chauffante sur l'élément de support et à raccorder chaque piste chauffante à un élément de connexion. Il est alors possible d'agencer des pistes chauffantes de manière indépendante ce qui facilite la répartition des zones chauffantes en fonction du besoin et améliore l'aspect esthétique du radôme.
- on fixe la piste chauffante sur l'élément de support par collage ou par fusion locale de l'élément de support.- la piste chauffante comprend un matériau choisi parmi du cuivre, du tungstène, ou un alliage de cuivre et de tungstène.
- la feuille de support est réalisée à partir d'une feuille de silicone, de polyoléfine (polyéthylène ou polypropylène), d'élastomère thermoplastique (TPE), de polyester, ou de polyamide. La feuille de support peut également être en époxy. La matière qui est surmoulée sur la feuille de support est choisie de façon à ce qu'elle soit compatible chimiquement avec le film pour assurer une bonne liaison et garantir un minimum défaut d'interface.

L'invention a également pour objet un élément pour pièce de carrosserie selon la revendication 10.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un élément pour pièce de carrosserie selon l'invention en cours de fabrication ;
[Fig. 2] la figure 2 est une vue en perspective de l'élément pour pièce de carrosserie de la figure 1 équipé d'un moyen de protection ;
[Fig. 3] la figure 3 est un ensemble de schémas (figures 3a-3e) illustrant différentes étapes du procédé de fabrication de l'élément pour carrosserie selon un premier mode de réalisation ;
[Fig. 4] la figure 4 est un ensemble de schémas (figures 4a-4f) illustrant différentes étapes du procédé de fabrication de l'élément pour carrosserie selon un second mode de réalisation ;
[Fig. 5] la figure 5 est une vue en perspective de l'élément pour carrosserie partiellement coupé selon un plan orthogonal à la feuille support obtenu selon le second mode de réalisation.

### Description détaillée

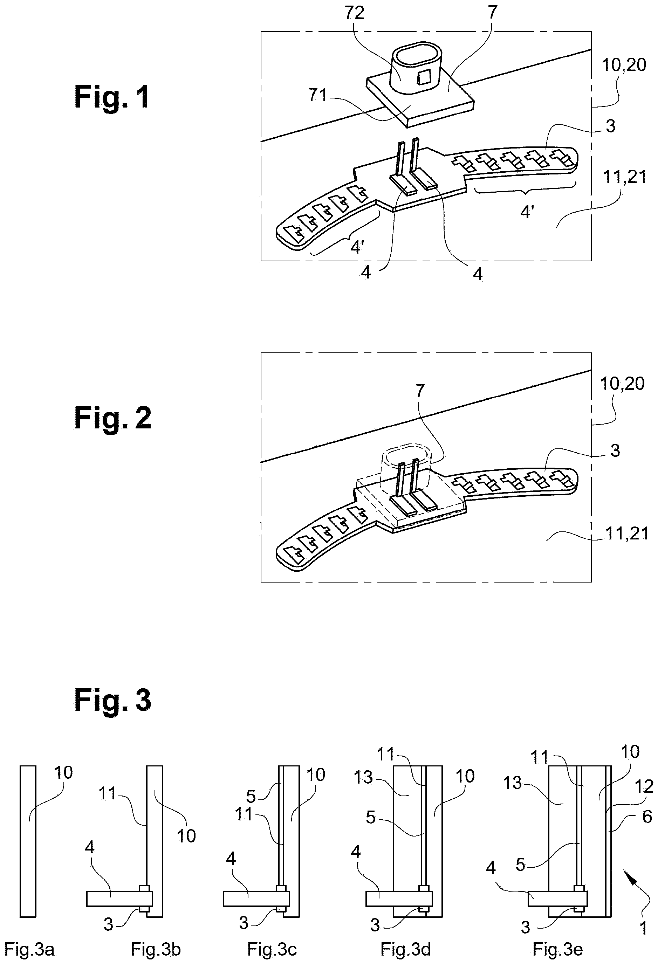

On a représenté sur les figures 1 et 2 un élément pour pièce de carrosserie désigné par la référence générale 1 qui est en cours de fabrication selon le procédé tel que proposé par la présente invention. Le procédé de fabrication comprend une première étape à laquelle on réalise un élément de support 10 ou 20 présentant une première face 11, 21 sur laquelle est fixé une feuille support 3 comprenant au moins un organe de connexion 4. L'organe de connexion 4 est formé d'une plaque conductrice de l'électricité. L'organe de connexion 4 permettra de raccorder au moins une piste chauffante 5 à une source d'énergie. Comme cela sera décrit par la suite, la feuille de support 3 peut comprendre un ou des éléments de connexion 4' connectés entre eux et à l'organe de connexion 4, chaque élément de connexion 4' pourra être relié à une piste chauffante 5. Les différentes possibilités de réalisation de circuits électriques reliant les différents éléments susmentionnés, bien connues de l'homme du métier, ne feront pas l'objet d'une description détaillée dans la présente demande.

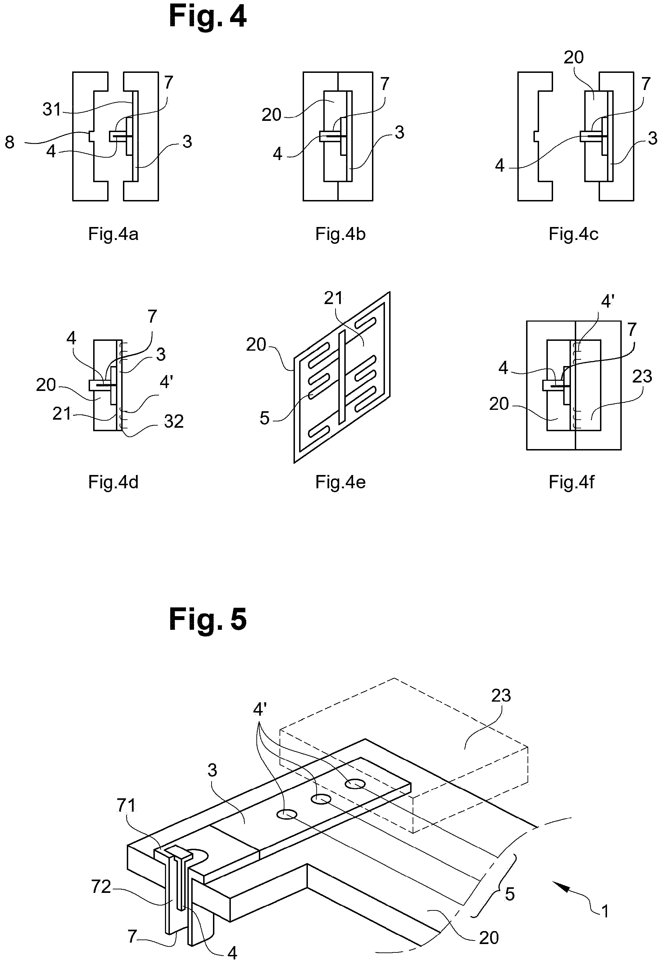

Deux modes de réalisation sont illustrés respectivement aux figures 3 et 4 et seront décrits en détail plus loin. Dans les deux modes de réalisation, on dispose une piste chauffante 5 sur l'élément de support 10, 20, la piste chauffante 5 étant disposée sur la première face 11 ou 21 de l'élément de support 10 ou 20, la piste chauffante 5 pouvant être formée d'un fil conducteur de l'électricité. Ensuite, on raccorde la piste chauffante 5 à l'organe de connexion 4 (par exemple par soudure à l'étain) et on dispose l'élément de support 10 ou 20 dans une chambre de moulage d'un moule définissant la forme de l'élément pour pièce de carrosserie, la première face 11 ou 21 de l'élément de support 10, 20 étant face à l'intérieur de la chambre de moulage et on injecte une matière plastique dans la chambre de moulage afin de recouvrir la piste chauffante 5.

Lors de cette injection, un moyen de protection 7 de l'organe de connexion 4 est placé autour de ce dernier pour le protéger de la matière plastique injectée en l'isolant pour par la suite garantir son accès pour le raccorder à un moyen d'alimentation électrique.

Avantageusement, le moyen de protection 7 est l'embase connectique permettant de réaliser le raccordement de l'organe de connexion 4 à un moyen d'alimentation électrique en accueillant un connecteur (non illustré). Ainsi, l'ensemble formé comprend déjà un moyen permettant la fixation d'un connecteur.

Dans le cas où le moyen de protection 7 comprend une ouverture permettant de relier l'organe de connexion 4 à un connecteur (par exemple si l'organe de protection 7 est une embase connectique comprenant une paroi (ou fût) 72 entourant l'organe de connexion '), le moule dans lequel la matière plastique est injectée comprend un logement 8 (numérotée sur la figure 4a) dans lequel la paroi 72 vient se loger de manière à obturer l'ouverture et ainsi empêcher l'entrée de matière plastique à l'intérieur du moyen de protection 7 et recouvrant alors l'organe de connexion 4 grâce à un ajustement entre la paroi 72 et le logement 8.

Comme cela sera décrit par la suite, le nombre de moulage peut varier selon le mode de réalisation. Dès lors, il est possible de reproduire cette configuration d'obturation de l'ouverture dans le logement 8 à chaque moulage pour protéger l'organe de connexion 4.

Maintenant, on va décrire le premier mode de réalisation qui est visible aux figures 3a-3e. Selon ce mode de réalisation, l'élément de support 10 est un film en matière plastique comme illustré à la figure 3a. On peut réaliser ce film par extrusion ou laminage avant de fixer une feuille support 3 comprenant au moins un organe de connexion 4 sur une première face 11 du film comme illustré à la figure 3b. Il est également envisageable d'utiliser un film existant sur le marché. Le film forme une première couche transparente.

Tel que visible à la figure 3c, on dispose une piste chauffante 5 sur le film, la piste chauffante 5 étant disposée sur la première face 11 de l'élément de support 10. Ensuite, on raccorde la piste chauffante 5 à l'organe de connexion 4, par soudure par exemple. La piste chauffante 5 est répartie de façon homogène sur toute la surface du film et y est fixée par collage ou par fusion locale du film.

Une étape de moulage est ensuite réalisée dans laquelle on dispose l'élément de support 10 dans une chambre de moulage d'un moule définissant la forme de l'élément pour pièce de carrosserie, la première face 11 de l'élément de support 10 étant face à l'intérieur de la chambre de moulage et on injecte une matière plastique dans la chambre de moulage afin de recouvrir la piste chauffante 5. On obtient ainsi une seconde couche transparente 13 tel qu'illustré par la figure 3d. La chambre de moulage de l'élément pour pièce de carrosserie est configurée de façon à ce qu'après le moulage, l'organe de connexion 4 soit accessible par un moyen d'alimentation électrique. Ainsi, l'épaisseur de la seconde couche 13 transparente est inférieure à celle de l'organe de connexion 4. C'est également lors de cette étape qu'une protection de l'organe de connexion 4 par un moyen de protection 7 telle que décrite plus haut est réalisée en plaçant avant cette étape ledit moyen de protection 7.

Afin d'améliorer la résistance de l'élément aux UV et de le protéger de la rayure, il est possible de déposer un revêtement 6 sur une seconde face 12 du film qui est opposée à la première face 11 comme montré à la figure 3e. Cette étape est également envisageable dans le second mode de réalisation qui est illustré aux figures 4 et 5.

Selon le second mode de réalisation de la présente invention, l'élément de support 20 est une pièce moulée formant une première couche transparente qui est obtenu par les étapes suivantes : on dispose une feuille support 3 comprenant au moins un organe de connexion 4 dans une chambre de moulage d'une moule définissant la forme de la pièce moulée comme visible à la figure 4a. Une première face 31 de la feuille support 3 est placée face à l'intérieur de la chambre de moulage. A la fermeture du moule, une matière plastique, par exemple un matériau thermoplastique, est injectée dans la chambre de moulage tel que visible à la figure 4b et on obtient la pièce moulée couvrant la première face 31 de la feuille support 3 comme montré à la figure 4c. La chambre de moulage de la pièce moulée 20 est configurée de façon à ce que l'épaisseur de la pièce moulée 20 soit inférieure à celle de l'organe de connexion 4 pour que ce dernier soit accessible par un moyen d'alimentation électrique. Comme cela est visible sur les figure 4a à 4con place le moyen de protection 7 autour de l'organe de protection 4 lors de ce premier moulage pour l'isoler de la matière injectée comme expliqué plus haut.

Par la suite, tel que visible à la figure 4d, on dispose plusieurs éléments de connexion 4' sur une seconde face 32 de la feuille support 3 qui est opposée à la première face 31, les éléments de connexion 4' étant reliés électriquement entre eux par des moyens de connexion intégrés dans la feuille support 3. Tous les éléments de connexion 4' sont également reliés à l'organe de connexion 4 qui se trouve sur la première face 31.

Après le surmoulage de la première couche transparente (ou élément de support 20) et comme visible à la figure 4e, des pistes chauffantes 5 sont disposées sur la première couche et raccordées chacune à un élément de connexion 4' sur la seconde face 32 de la feuille support 3 par soudure. Il peut par exemple s'agir de plusieurs fils tels que décrits plus haut formant une zone chauffante (cette configuration à plusieurs éléments de connexion 4' et plusieurs pistes chauffantes 5 est également envisageables pour le premier mode de réalisation de l'invention). Les pistes chauffantes 5 sont réparties de façon homogène sur toute la surface de la première couche transparente et y sont fixées par collage ou par fusion locale de la première couche.

Enfin, l'ensemble comprenant la première couche, la feuille support 3 et les pistes chauffantes 5 est placé dans une chambre de moulage définissant la forme de l'élément pour pièce de carrosserie, la première face 21 de l'élément de support 20 étant face à l'intérieur de la chambre de moulage. Une autre matière plastique, par exemple du polyuréthane thermoplastique (TPU), est injectée dans la chambre de moulage afin de recouvrir les pistes chauffante 5 comme illustré à la figure 4f. Là encore, le moyen de protection 7 protège l'organe de connexion 4 (par exemple, l'ouverture du moyen de protection 7 peut de nouveau être placée dans l'encoche 8).

Selon le premier ou le second mode de réalisation, on obtient un élément 1 pour pièce de carrosserie comprenant une première couche en plastique transparente (correspondant à l'élément de support 10 ou 20), une seconde couche 13, 23 en plastique transparente, au moins une piste chauffante 5 agencée entre les couches en plastique transparente et reliée à un organe de connexion 4, la piste chauffante 5 étant en contact direct avec les première et seconde couches.

Un tel élément 1 obtenu par le procédé de fabrication selon le second mode de réalisation est visible à la figure 5 qui illustre un autre aspect de l'invention concernant un moyen de protection 7 de l'organe de connexion. Le moyen de protection 7 tel qu'il est illustré également aux figures 1 et 2 comprend une base 71 destinée à prendre appui contre la feuille support 3 et une paroi 72 s'étendant depuis la base 71 et définissant un espace destiné à contenir au moins partiellement l'organe de connexion 4 de façon à ce que celui-ci soit isolé de la matière plastique injectée pendant le moulage tout en lui gardant un accès pour le branchement à une alimentation électrique.

L'invention n'est pas limitée aux modes de réalisation présentés et d'autres modes de réalisation apparaîtront clairement à l'homme du métier. Il est notamment possible d'agencer plusieurs organes de connexion dans le premier mode de réalisation et de les relier électriquement ensemble. Il est également possible de prévoir un anneau ou une zone technique opaque permettant de cacher la feuille supporte lorsque l'élément est assemblé sur le véhicule.

### Liste de références

1 : élément
10, 20 : élément de support (première couche)
13, 23 : seconde couche
11, 21 : première face de l'élément de support
12 : seconde face de l'élément de support
3 : feuille de support
31 : première face de la feuille support
32 : seconde face de la feuille support
4, : organe de connexion
4' : éléments de connexion
5 : piste chauffante
7 : moyen de protection
71 : base du moyen de protection
72 : paroi du moyen de protection
8 : logement

## Revendications

1. Procédé de fabrication d'un élément (1) pour pièce de carrosserie comprenant successivement les étapes suivantes :
- Étape A : on réalise un élément de support (10, 20) présentant une première face (11, 21) sur laquelle est fixée une feuille support (3) comprenant au moins un organe de connexion (4).
- Étape B : on dispose au moins une piste chauffante (5) sur l'élément de support (10, 20), la piste chauffante (5) étant disposée sur la première face (11, 21) de l'élément de support (10, 20),
- Étape C : on raccorde la piste chauffante (5) à l'organe de connexion (4),
- Étape D : on dispose l'élément de support (10, 20) dans une chambre de moulage d'un moule définissant la forme de l'élément pour pièce de carrosserie, la première face (11, 21) de l'élément de support (10, 20) étant face à l'intérieur de la chambre de moulage et on injecte une matière plastique dans la chambre de moulage afin de recouvrir la piste chauffante (5), le procédé étant **caractérisé en ce qu'**il comprend l'étape suivante avant l'étape D :
- On dispose sur la feuille support un moyen de protection (7) de l'organe de connexion (4) de façon à protéger au moins partiellement l'organe de connexion (4) de la matière plastique pendant l'étape D.

2. Procédé de fabrication selon la revendication 1 dans lequel l'élément de support (10) est un film en matière plastique et l'étape A comprend les étapes suivantes :
- on réalise un film en matière plastique,
- on fixe sur une première face du film une feuille support (3) comprenant au moins un organe de connexion (4).

3. Procédé de fabrication selon l'une quelconque des revendications précédentes comprenant l'étape suivante :
- on dépose un revêtement (6) sur une seconde face (12) de l'élément de support (10, 20), opposée à la première face (11).

4. Procédé de fabrication selon la revendication 1 dans lequel l'élément de support (20) est une pièce moulée et l'étape A comprend les étapes suivantes :
- on dispose une feuille support (3) comprenant au moins un organe de connexion (4) dans une chambre de moulage d'un moule définissant la forme de l'élément de support (20), une première face (31) de la feuille support (3) étant face à l'intérieur de la chambre de moulage, et on injecte une matière plastique dans la chambre de moulage afin d'obtenir une pièce moulée couvrant la première face (31) de la feuille support (3),
- On dispose sur une seconde face (32) de la feuille support (3), opposée à la première face (31), au moins un élément de connexion (4').

5. Procédé de fabrication selon l'une quelconque des revendications précédentes dans lequel la piste chauffante (5) est raccordée à l'organe de connexion (4) par soudure.

6. Procédé de fabrication selon l'une quelconque des revendications précédentes dans lequel la feuille support (3) comprend une pluralité d'éléments de connexion (4') reliés électriquement entre eux par des moyens de connexion intégrés dans la feuille support (3) et les étapes B et C consistent à disposer un nombre correspondant de piste chauffante (5) sur l'élément de support (10, 20) et à raccorder chaque piste chauffante (5) à un élément de connexion (4').

7. Procédé de fabrication selon l'une quelconque des revendications précédentes dans lequel on fixe la piste chauffante (5) sur l'élément de support (10, 20) par collage ou par fusion locale de l'élément de support (10, 20).

8. Procédé de fabrication selon l'une quelconque des revendications précédentes dans lequel la piste chauffante (5) comprend un matériau choisi parmi du cuivre, du tungstène, ou un alliage de cuivre et de tungstène.

9. Procédé de fabrication selon l'une quelconque des revendications précédentes dans lequel la feuille de support (3) est réalisée à partir d'une feuille de silicone, de polyoléfine (polyéthylène ou polypropylène), d'élastomère thermoplastique (TPE), de polyester, ou de polyamide.

10. Élément pour pièce de carrosserie comprenant une première couche en plastique transparente, une seconde couche (13, 23) en plastique transparente, une piste chauffante (5) agencée entre les couches en plastique transparente et reliée à un organe de connexion (4), la piste chauffante (5) étant en contact direct avec les première et seconde couches, **caractérisé en ce qu'**il comprend un moyen de protection (7) de l'organe de connexion (4) disposé sur une feuille support (3) comprenant l'organe de connexion (4) pour protéger au moins partiellement l'organe de connexion (4) de la matière plastique lors d'une étape de moulage de l'élément pour pièce de carrosserie.

## Patentansprüche

1. Verfahren zur Herstellung eines Elements (1) für ein Karosserieteil, das
nacheinander die folgenden Schritte aufweist:
- Schritt A: Herstellen eines Trägerelements (10, 20) mit einer ersten Seite (11, 21), auf der eine Trägerfolie (3) mit mindestens einem Verbindungselement (4) befestigt ist,
- Schritt B: Anordnen mindestens einer Heizspur (5) auf dem Trägerelement (10, 20), wobei die Heizspur (5) auf der ersten Seite (11, 21) des Trägerelements (10, 20) angeordnet ist,
- Schritt C: Verbinden der Heizspur (5) mit dem Verbindungselement (4),
- Schritt D: Anordnen des Trägerelements (10, 20) in einer Formkammer einer Form, die die Form des Elements für ein Karosserieteil definiert, wobei die erste Seite (11, 21) des Trägerelements (10, 20) dem Inneren der Formkammer zugewandt ist, und Einspritzen eines Kunststoffmaterials in die Formkammer, um die Heizspur (5) abzudecken,
wobei das Verfahren **dadurch gekennzeichnet ist, dass** es vor Schritt D den folgenden Schritt aufweist:
- Anordnen eines Schutzmittels (7) für das Verbindungselement (4) auf der Trägerfolie, sodass das Verbindungselement (4) während des Schritts D zumindest teilweise vor dem Kunststoff geschützt wird.

2. Herstellungsverfahren nach Anspruch 1, bei dem das Trägerelement (10) eine Kunststofffolie ist und Schritt A die folgenden Schritte aufweist:
- Herstellen einer Folie aus Kunststoff,
- Befestigen einer Trägerfolie (3) auf einer ersten Seite der Folie, die mindestens ein Verbindungselement (4) aufweist.

3. Verfahren zur Herstellung nach einem der vorhergehenden Ansprüche, aufweisend den folgenden Schritt:
- Aufbringen einer Beschichtung (6) auf einer zweiten Seite (12) des Trägerelements (10, 20), die der ersten Seite (11) gegenüberliegt.

4. Herstellungsverfahren nach Anspruch 1, bei dem das Trägerelement (20) ein Formteil ist und Schritt A die folgenden Schritte aufweist:
- Anordnen einer Trägerfolie (3) mit mindestens einem Verbindungselement (4) in einer Formkammer einer Form, die die Form des Trägerelements (20) definiert, wobei eine erste Seite (31) der Trägerfolie (3) dem Inneren der Formkammer zugewandt ist, und Spritzen eines Kunststoffmaterials in die Formkammer, um ein Formteil zu erhalten, das die erste Seite (31) der Trägerfolie (3) bedeckt,
- Anordnen mindestens eines Verbindungselements (4') auf einer zweiten Seite (32) der Trägerfolie (3), die der ersten Seite (31) gegenüberliegt.

5. Herstellungsverfahren nach einem der vorhergehenden Ansprüche, bei dem die Heizspur (5) durch Löten mit dem Verbindungselement (4) verbunden wird.

6. Herstellungsverfahren nach einem der vorhergehenden Ansprüche, bei dem die Trägerfolie (3) eine Vielzahl von Verbindungselementen (4') aufweist, die durch in die Trägerfolie (3) integrierte Verbindungsmittel elektrisch miteinander verbunden sind, und die Schritte B und C darin bestehen, eine entsprechende Anzahl von Heizspuren (5) auf dem Trägerelement (10, 20) anzuordnen und jede Heizspur (5) mit einem Verbindungselement (4') zu verbinden.

7. Herstellungsverfahren nach einem der vorhergehenden Ansprüche, bei dem die Heizspur (5) auf dem Trägerelement (10, 20) durch Kleben oder durch lokales Schmelzen des Trägerelements (10, 20) befestigt wird.

8. Herstellungsverfahren nach einem der vorhergehenden Ansprüche, bei dem die Heizspur (5) ein Material aufweist, das aus Kupfer, Wolfram oder einer Legierung aus Kupfer und Wolfram ausgewählt ist.

9. Herstellungsverfahren nach einem der vorhergehenden Ansprüche, bei dem die Trägerfolie (3) aus einer Folie aus Silikon, Polyolefin (Polyethylen oder Polypropylen), thermoplastischem Elastomer (TPE), Polyester oder Polyamid hergestellt wird.

10. Element für ein Karosserieteil, aufweisend eine erste Schicht aus transparentem Kunststoff, eine zweite Schicht (13, 23) aus transparentem Kunststoff, eine Heizspur (5), die zwischen den Schichten aus transparentem Kunststoff angeordnet und mit einem Verbindungselement (4) verbunden ist, wobei die Heizspur (5) in direktem Kontakt mit der ersten und der zweiten Schicht steht, **dadurch gekennzeichnet, dass** es ein Schutzmittel (7) für das Verbindungselement (4) aufweist, das auf einer Trägerfolie (3) angeordnet ist, die das Verbindungselement (4) aufweist, um das Verbindungselement (4) zumindest teilweise vordem Kunststoffmaterial während eines Schritts des Formens des Elements für ein Karosserieteil zu schützen.

## Claims

1. Method of manufacturing an element (1) for a bodywork part successively comprising the following steps:
- Step A: producing a support element (10, 20) having a first face (11, 21) on which a support sheet (3) is fixed comprising at least one connection member (4).
- Step B: arranging at least one heating track (5) on the support element (10, 20), the heating track (5) being arranged on the first face (11, 21) of the support element (10, 20),
- Step C: connecting the heating track (5) to the connection member (4),
- Step D: arranging the support element (10, 20) in a molding chamber of a mold defining the shape of the element for a bodywork part, the first face (11, 21) of the support element (10, 20) facing the inside of the molding chamber, and injecting a plastic material into the molding chamber in order to cover the heating track (5),
Le method being **characterized in that** the following step before step D:
- Arranging protective means (7) for the connection member (4) on the support sheet so as to at least partially protect the connection member (4) from the plastic material during step D.

2. The manufacturing method according to claim 1, wherein the support element (10) is a plastic film and step A comprises the following steps:
- making a plastic film,
- fixing a support sheet (3) comprising at least one connection member (4) on a first face of the film.

3. The manufacturing method according to any one of the preceding claims, comprising the following step:
- depositing a coating (6) on a second face (12) of the support element (10, 20), opposite the first face (11).

4. The manufacturing method according to claim 1, wherein the support element (20) is a molded part and step A comprises the following steps:
- arranging a support sheet (3) comprising at least one connection member (4) in a molding chamber of a mold defining the shape of the support element (20), a first face (31) of the support sheet (3) facing the inside of the molding chamber, and injecting a plastic material into the molding chamber in order to obtain a molded part covering the first face (31) of the support sheet (3),
- Arranging at least one connection element (4') on a second face (32) of the support sheet (3), opposite the first face (31).

5. The manufacturing method according to any one of the preceding claims, wherein the heating track (5) is connected to the connection member (4) by welding.

6. The manufacturing method according to any one of the preceding claims, wherein the support sheet (3) comprises a plurality of connection elements (4') that are electrically connected to each other by connection means integrated in the support sheet (3) and Steps B and C consist of arranging a corresponding number of heating tracks (5) on the support element (10, 20) and of connecting each heating track (5) to a connection element (4').

7. The manufacturing method according to any one of the preceding claims, wherein the heating track (5) is fixed on the support element (10, 20) by gluing or by local melting of the support element (10, 20).

8. The manufacturing method according to any one of the preceding claims, wherein the heating track (5) comprises a material selected from copper, tungsten, or an alloy of copper and tungsten.

9. The manufacturing method according to any one of the preceding claims, wherein the support sheet (3) is made from a sheet of silicone, polyolefin (polyethylene or polypropylene), thermoplastic elastomer (TPE), polyester, or polyamide.

10. An element for a bodywork part comprising a first transparent plastic layer, a second transparent plastic layer (13, 23), a heating track (5) arranged between the transparent plastic layers and connected to a connection member (4), the heating track (5) being in direct contact with the first and second layers, **characterized in that** it comprises protective means (7) for the connection member (4) placed on a support sheet (3) comprising the connection element (4) so as to at least partially protect the connection member (4) from the plastic material during a molding step of the element for the bodywork part.
